(19) Europäisches Patentamt / European Patent Office / Office européen des brevets

(11) **EP 1 634 405 B1**

(12) **FASCICULE DE BREVET EUROPEEN**

(45) Date de publication et mention
de la délivrance du brevet:
**12.12.2018 Bulletin 2018/50**

(21) Numéro de dépôt: **04767232.4**

(22) Date de dépôt: **02.06.2004**

(51) Int Cl.:
***H04L 9/08*** *(2006.01)*

(86) Numéro de dépôt international:
**PCT/FR2004/001362**

(87) Numéro de publication internationale:
**WO 2005/008951 (27.01.2005 Gazette 2005/04)**

(54) **PROCEDE, SYSTEME ET SUPPORTS D'ENREGISTREMENT DE CHIFFREMENT ET/OU DE DECHIFFREMENT TRAÇABLE**

VERFAHREN, SYSTEM UND SPEICHERMEDIUM ZUR AUFSPÜRBAREN VERSCHLÜSSELUNG BZW. ENTSCHLÜSSELUNG VON DATEN

TRACEABLE METHOD AND SYSTEM FOR ENCRYPTING AND/OR DECRYPTING DATA, AND RECORDING MEDIA THEREFOR

(84) Etats contractants désignés:
**AT BE BG CH CY CZ DE DK EE ES FI FR GB GR HU IE IT LI LU MC NL PL PT RO SE SI SK TR**

(30) Priorité: **17.06.2003 FR 0307287**

(43) Date de publication de la demande:
**15.03.2006 Bulletin 2006/11**

(73) Titulaire: **Orange**
**75015 Paris (FR)**

(72) Inventeurs:
- **ARDITTI MODIANO, David**
  **F-92140 CLAMART (FR)**
- **BILLET, Olivier**
  **F-06140 TOURRETTES/LOUP (FR)**
- **GILBERT, Henri**
  **F-91440 BURES SUR YVETTE (FR)**

(74) Mandataire: **Cabinet Plasseraud**
**66, rue de la Chaussée d'Antin**
**75440 Paris Cedex 09 (FR)**

(56) Documents cités:
- **BILLET O, GILBERT H: "A Traceable Block Cipher" ASIACRYPT 2003: 9TH INTERNATIONAL CONFERENCE ON THE THEORY AND APPLICATION OF CRYPTOLOGY AND INFORMATION SECURITY (SPRINGER-VERLAG, HEIDELBERG, LECTURE NOTES IN COMPUTER SCIENCE 2894), novembre 2003 (2003-11), pages 331-346, XP002273113 ISBN: 3-540-20592-6**
- **BONEH D ; FRANKLIN M: "An efficient public key traitor tracing scheme" ADVANCES IN CRYPTOLOGY - CRYPTO'99. 19TH ANNUAL INTERNATIONAL CRYPTOLOGY CONFERENCE. PROCEEDINGS, 19 août 1999 (1999-08-19), pages 338-353, XP002273114 Santa Barbara, CA, USA ISBN: 3-540-66347-9**
- **MATSUMOTO T; IMAI H: "PUBLIC QUADRATIC POLYNOMIAL-TUPLES FOR EFFICIENT SIGNATURE-VERIFICATION AND MESSAGE-ENCRYPTION" ADVANCES IN CRYPTOLOGY- EUROCRYPT '88. INTERNATIONAL CONFERENCE ON THE THEORY AND APPLICATION OF CRYPTOGRAPHIC TECHNIQUES, PROCEEDINGS. SPRINGER VERLAG, DE, 1988, pages 419-453, XP000568374 ISBN: 3-540-50251-3 cité dans la demande**
- **MENEZES; OORSCHOT; VANSTONE: "HANDBOOK OF APPLIED CRYPTOGRAPHY, PASSAGE" CRC PRESS SERIES ON DISCRETE MATHEMATICS AND ITS APPLICATIONS, 1997, pages 551-552, XP002273115 BOCA RATON, FL, USA ISBN: 0-8493-8523-7**
- **PATARIN J ; GOUBIN L ; COURTOIS N: "Improved algorithms for isomorphisms of polynomials" ADVANCES IN CRYPTOLOGY - EUROCRYPT '98. INTERNATIONAL CONFERENCE ON THE THEORY AND APPLICATION OF CRYPTOGRAPHIC TECHNIQUES. PROCEEDINGS, 4 juin 1998 (1998-06-04), pages 184-200, XP002273116 Espoo, Finland ISBN: 3-540-64518-7**

**Description**

L'invention concerne un procédé et un système traçables de chiffrement et/ou de déchiffrement d'informations diffusées ainsi que des supports d'enregistrement pour la mise en oeuvre du procédé.

Plus précisément, l'invention concerne un procédé traçable dans lequel :

- lors du chiffrement des informations diffusées, l'émetteur met en oeuvre au moins une première fonction cryptographique secrète, et
- lors du déchiffrement de ces informations diffusées, tous les décodeurs mettent en oeuvre au moins une même seconde fonction cryptographique secrète identique à ladite première fonction ou à son inverse, chaque décodeur faisant appel à cet effet à une description mathématique de ladite seconde fonction enregistrée dans une mémoire.

Dan Boneh et Matthew Franklin ont publié un article intitulé « An Efficient Public Key Traitor Tracing Scheme » (Proceedings Crypto '99, Lecture Notes in Computer Science, Vol. 1666, Springer-Verlag, pp. 338--353, 1999). Cet article divulgue un schéma de chiffrement à clé publique comprenant une clé de chiffrement publique pour de nombreuses clés privées de déchiffrement. Lorsqu'un contenu numérique (par exemple un clip) chiffré avec la clé publique de chiffrement est distribué via un canal de diffusion, chaque utilisateur légitime peut le déchiffrer avec sa propre clé privée. Si certains utilisateurs s'associent pour créer une nouvelle clé de déchiffrement, alors il existe un algorithme efficace pour déterminer les créateurs d'une telle nouvelle clé. Le système proposé propose ainsi une solution au problème de la détermination du « traître ».

Les procédés traçables de chiffrement sont des procédés dans lesquels un procédé de traçage des traîtres peut être mis en oeuvre.

Les procédés de traçage des traîtres sont utilisés pour lutter contre le piratage de services de distribution, sur un canal diffusé, de contenus multimédia chiffrés tels que vidéo, télévision, images, musique, textes, pages Web, livres électroniques, programmes, etc. Les procédés de traçage des traîtres ont pour but de prévenir la redistribution frauduleuse, par un ou plusieurs utilisateurs légitimes de tels services, de données déduites des clés secrètes et des algorithmes de déchiffrement implantés dans leur équipement de décodage, afin de permettre à des utilisateurs illicites (pirates) d'accéder aux contenus en clair. Ces procédés garantissent que si une telle fraude se produit, l'identité de l'un au moins des utilisateurs légitimes qui sont à l'origine de la fraude peut être reconstituée par l'opérateur du service de distribution de contenus ou plus généralement par une autorité à partir des données redistribuées aux utilisateurs illicites. Cet utilisateur légitime à l'origine de la fraude est appelé "traitre" dans la suite de la description.

Le concept de traçage des traîtres a été pour la première fois proposé par Benny Chor, Amos Fiat et Moni Naor dans leur article de 1994, "Tracing Traitors", Advances in Cryptology - Crypto'94, Lecture Notes in Computer Science, vol. 839, Springer-Verlag, 1994, pp. 257-270. Dans cet article, les premières techniques de traçage dans un système cryptographique sont proposées. Les systèmes cryptographiques dans lesquels un procédé de traçage des traîtres peut être mis en oeuvre sont dits "traçables". Quasiment toutes ces techniques sont de nature combinatoire. En d'autres termes, chaque utilisateur légitime du système cryptographique se voit attribuer un sous-ensemble de clés d'un ensemble (généralement assez grand) de clés de base. Ce sous-ensemble de clés de base attribué à un utilisateur est unique pour chaque utilisateur et constitue sa clé personnelle.

Les informations diffusées dans ce système comprennent des messages chiffrés. Chaque message chiffré est formé d'un contenu chiffré à l'aide d'une clé de chiffrement de contenu et d'en-têtes chiffré chacun avec une clé de base. Chaque en-tête contient une valeur représentant une partie de la clé de chiffrement de contenu.

Lorsqu'un utilisateur reçoit l'un de ces messages, il déchiffre à l'aide de son sous-ensemble de clés de base certaines valeurs contenues dans les en-têtes reçus. Il combine alors les valeurs ainsi déchiffrées pour reconstituer la clé de chiffrement de contenu et cette clé de chiffrement de contenu reconstituée est utilisée pour déchiffrer le contenu du message.

Si l'un des utilisateurs légitimes du système communique sa clé personnelle à un utilisateur illicite, alors, dans ce système cryptographique traçable, il est possible de retrouver l'identité du traître à partir de la clé personnelle mise en oeuvre par l'utilisateur illicite.

Toutefois, les procédés de traçage de traîtres de nature combinatoire présentent l'inconvénient qu'il est nécessaire de diffuser un volume considérable d'en-têtes. Le nombre d'en-têtes à diffuser est en particulier proportionnel au logarithme du nombre d'utilisateurs légitimes du système ainsi qu'à d'autres paramètres tel que la taille maximale k des coalitions de traîtres contre lesquelles on cherche à se protéger. On entend ici, par coalition, un groupe de k traîtres qui se regroupent pour combiner leurs clés personnelles de manière à essayer de créer une nouvelle clé personnelle apte à être utilisée pour déchiffrer le contenu chiffré sans pour autant que l'étude de cette nouvelle clé personnelle divulgue l'identité de l'un des traîtres.

L'invention vise à remédier à cet inconvénient en proposant un nouveau procédé de traçage des traîtres ne nécessitant pas la diffusion d'un nombre important d'en-têtes.

L'invention a donc pour objet un procédé de traçage des traîtres tel que décrit ci-dessus caractérisé en ce que lors de la mise en oeuvre de la seconde fonction, la description mathématique de cette seconde fonction à laquelle chaque décodeur fait appel est différente d'un décodeur à l'autre ou d'un groupe de décodeurs à l'autre de manière à ce que la description mathématique à laquelle il est fait appel identifie de façon unique le décodeur ou un groupe de décodeurs particulier parmi l'ensemble des décodeurs.

Dans le procédé ci-dessus, il est possible de retrouver le traître qui a communiqué la description mathématique de sa seconde fonction secrète à un utilisateur illicite à partir de l'analyse de la description mathématique de cette seconde fonction mise en oeuvre par l'utilisateur illicite pour déchiffrer les informations transmises. En effet, par construction de chaque description mathématique du système, celle-ci est représentative de l'identité du traître. De plus, avec les procédés combinatoires, à cause du fait qu'un jeu personnel de clés est mis en oeuvre dans chaque décodeur, il est nécessaire que la même clé de chiffrement de contenu soit transmise plusieurs fois chiffrée sous différentes formes. Les en-têtes placés au début du contenu diffusé sont utilisés à cet effet. Ainsi l'information contenue dans les en-têtes est extrêmement redondante et chaque décodeur ne traite qu'une partie des en-têtes reçus.

Dans le procédé ci-dessus grâce au fait que l'identification d'un traître repose non plus sur la mise ne oeuvre de jeux personnels de clés, mais sur la mise en oeuvre de descriptions différentes d'une même fonction cryptographique, identique à la première fonction cryptographique ou à son inverse mise en oeuvre par l'émetteur, il n'est plus nécessaire qu'au moins une partie des informations diffusées soit redondante. Par conséquent, le nombre d'en-têtes nécessaires pour diffuser un message chiffré à l'aide du procédé ci-dessus est inférieur au nombre d'en-têtes nécessaires pour diffuser le même message à l'aide d'un procédé combinatoire.

Suivant d'autres caractéristiques du procédé, celui-ci se caractérise en ce que :

- la seconde fonction cryptographique est apte à traiter des informations non redondantes ;
- ladite description mathématique $F_{Kj}$ enregistrée dans la mémoire de chaque décodeur est formée de plusieurs fonctions élémentaires $G_{i,j}$ qui doivent être composées les unes avec les autres dans un ordre déterminé pour former ladite seconde fonction secrète.
- chaque fonction élémentaire $G_{i,j}$ est égale à la composée d'au moins trois fonctions selon l'une des relations suivantes :

$$G_{1,j} = f'_{1,j} \, o g_{\sigma j \,(1)} \, oS$$
$$G_{2,j} = f'_{2,j} \, o g_{\sigma j \,(2)} \, of_{1,j}$$
$$\cdots\cdots\cdots\cdots\cdots\cdots\cdots\cdots$$
$$G_{r-1,j} = f'_{r-1,\,j} \, o g_{\sigma j \,(r-1)} \, of_{r-2,j}$$
$$G_{r,\,j} = T o g_{\sigma j \,(r)} \, of_{r-1,j}$$

où :

- $G_{i,j}$ est la ième fonction élémentaire du décodeur j, j étant un indice identifiant un décodeur ou un groupe de décodeurs
- les fonctions $f_{i,j}$ et $f'_{i,j}$ sont des fonctions prédéfinies aptes à rendre non commutatives entre elles les fonctions élémentaires $G_{i,j}$
- $\sigma_j$ est une permutation de l'ensemble d'indices $\{1; ... ; r\}$ unique pour chaque décodeur ou groupe de décodeurs
- $g_{\sigma j(t)}$ est la $\sigma_{j(t)}$ ième fonction d'un ensemble prédéfini formé de r fonctions prédéfinies $g_i$ non linéaires commutatives entre elles, et
- S et T sont des fonctions prédéfinies aptes à rendre difficile la cryptanalyse des fonctions élémentaires respectivement $G_{1,j}$ et $G_{r,j}$.

- chaque fonction $f'_{i,j}$ est égale à l'inverse $f^{-1}_{i,j}$ de la fonction $f_{i,j}$ ;
- les fonctions $f_{i,j}$ sont des fonctions linéaires d'un ensemble $L^n$ des n-uplets d'éléments d'un corps fini L sur lui-même ;
- les fonctions S et T sont inversibles ;
- les fonctions S et T sont des fonctions linéaires d'un ensemble $L^n$ des n-uplets d'éléments d'un corps fini L vers lui-même ;
- les fonctions $g_i$ sont choisies de manière à ce que chaque fonction élémentaire $G_{i,j}$ corresponde à un bloc de chiffrement d'un algorithme de chiffrement multivariables ;
- chaque fonction $g_i$ est de la forme $g_i(a) = a^{ei}$, où a est un élément d'une l'extension L' de degré n d'un corps de base L à q éléments, et $e_i$ est un exposant prédéfini ;

- l'exposant $e_i$ est de la forme $1 + q^{\theta 1} + \cdots + q^{\theta i} + \cdots + q^{\theta d - 1}$, où les exposants $\theta_i$ sont des entiers prédéfinis.

L'invention a également pour objet un support d'enregistrement d'informations, caractérisé en ce qu'il comporte des instructions pour l'exécution d'un procédé traçable conforme à l'invention, lorsque ces instructions sont exécutées par un décodeur.

L'invention a également pour objet un support d'enregistrement d'informations, caractérisé en ce qu'il comporte des instructions pour l'exécution d'un procédé traçable conforme à l'invention, lorsque lesdites instructions sont exécutées par un émetteur.

L'invention a également pour objet un système traçable de chiffrement et/ou de déchiffrement d'informations diffusées apte à permettre l'identification, parmi différents utilisateurs légitimes, d'un traître qui a communiqué à un tiers non autorisé des informations secrètes de manière à ce que ce tiers puisse chiffrer et/ou déchiffrer les informations diffusées, ce système comportant :

- un émetteur propre à chiffrer les informations diffusées, cet émetteur étant apte à mettre en oeuvre au moins une première fonction cryptographique secrète, et
- plusieurs décodeurs propres à déchiffrer les informations diffusées, tous les décodeurs étant aptes à mettre en oeuvre au moins à une même seconde fonction cryptographique secrète identique à ladite première fonction ou à son inverse, à cet effet, chaque décodeur étant équipé d'une mémoire dans laquelle est enregistrée une description mathématique de ladite seconde fonction;

caractérisé en ce que la mémoire de chaque décodeur contient une description mathématique de ladite seconde fonction différente de celle enregistrée dans la mémoire des autres décodeurs ou dans la mémoire des autres groupes de décodeurs de manière à ce que cette description mathématique identifie de façon unique le décodeur ou un groupe de décodeurs particulier parmi l'ensemble des décodeurs.

Finalement, l'invention a également pour objet une mémoire destinée à être associée à un décodeur d'un système traçable de chiffrement et/ou de déchiffrement conforme à l'invention, caractérisée en ce qu'elle comporte une description mathématique équivalente de ladite seconde fonction secrète propre à être utilisée par le décodeur, cette description mathématique se composant de plusieurs fonctions élémentaires ($G_{i,j}$) dont chacune est égale à la composée d'au moins trois fonctions selon l'une des relations suivantes :

$$G_{1,j} = f_{1,j} \circ g_{\sigma j\,(1)} \circ S$$
$$G_{2,j} = f_{2,j} \circ g_{\sigma j\,(2)} \circ f_{1,j}$$
$$\cdots\cdots\cdots\cdots\cdots\cdots\cdots\cdots\cdots\cdots$$
$$G_{r-1,j} = f_{r-1,\,j} \circ g_{\sigma j\,(r-1)} \circ f_{r-2,j}$$
$$G_{r,\,j} = T \circ g_{\sigma j\,(r)} \circ f_{r-1,j}$$

où :

- $G_{i,j}$ est la ième fonction élémentaire du décodeur j, j étant un indice identifiant un décodeur ou un groupe de décodeurs
- les fonctions $f_{i,j}$ et $f_{i,j}$ sont des fonctions prédéfinies aptes à rendre non commutatives entre elles les fonctions élémentaires $G_{i,j}$
- $\sigma_j$ est une permutation de l'ensemble d'indices {1; ... ; r} unique pour chaque décodeur ou groupe de décodeurs
- $g_{\sigma j(t)}$ est la $\sigma_{j(t)}$ ième fonction d'un ensemble secret prédéfini formé de r fonctions prédéfinies $g_i$ non linéaires commutatives entre elles, et
- S et T sont des fonctions prédéfinies aptes à rendre difficiles la cryptanalyse des fonctions élémentaires respectivement $G_{1,j}$ et $G_{r,j}$.

L'invention sera mieux comprise à la lecture de la description qui va suivre, donnée uniquement à titre d'exemple et faite en se référant aux dessins sur lesquels :

- la figure 1 est une illustration schématique de l'architecture d'un système cryptographique traçable conforme à l'invention, et
- la figure 2 est un organigramme d'un procédé de traçage des traîtres conforme à l'invention.

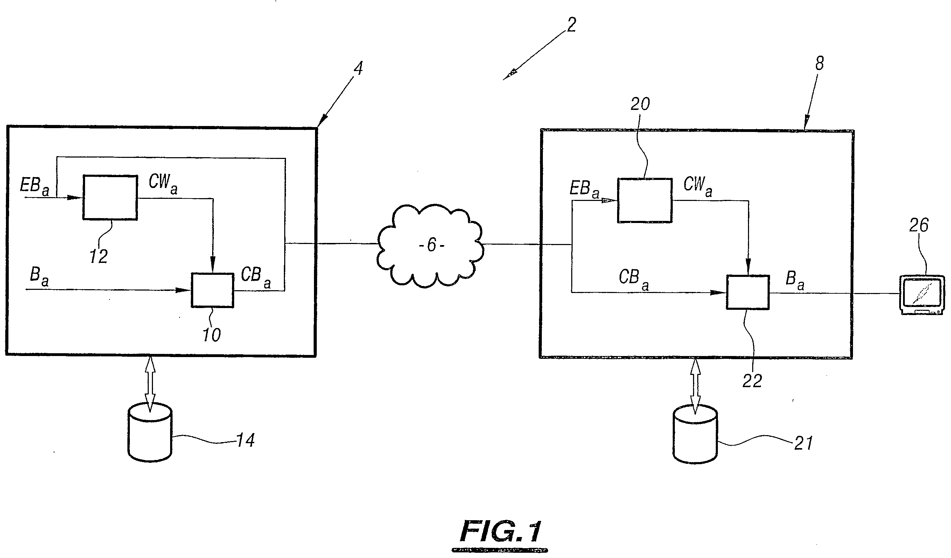

La figure 1 représente un système cryptographique traçable, désigné par la référence générale 2. Ce système 2 comporte un émetteur 4 d'informations chiffrées, un réseau 6 de transmission d'informations, et des décodeurs propres à déchiffrer les informations chiffrées diffusées par l'émetteur 4 au travers du réseau 6. Le système 2 comporte N décodeurs, N étant un nombre entier supérieur à 100, 1000 ou plus. Ici, pour simplifier l'illustration, seul un décodeur 8 a été représenté. Les autres décodeurs non représentés sont, par exemple, identiques au décodeur 8. Dans la suite de la description, ce décodeur 8 est associé à l'indice j.

A titre d'exemple, l'émetteur 4 est un émetteur de chaînes de télévision payantes. Cet émetteur 4 comporte un module 10 de chiffrement d'un contenu $B_a$ et un module 12 de calcul d'un mot de contrôle $CW_a$. Le contenu $B_a$ est ici formé d'une succession de bits d'informations représentant des chaînes de télévision en clair, c'est-à-dire non chiffrées.

Le module 12 est apte à exécuter une fonction cryptographique définie par une description mathématique $F_K$. Cette fonction cryptographique est destinée à traiter directement un en-tête $EB_a$ codé sur n caractères pour le transformer en un mot de contrôle $CW_a$ codé également sur n caractères, n étant un entier strictement positif supérieur, par exemple, à 100. Ici, à titre d'exemple, chaque caractère est soit un "0" soit un "1".

A cet effet, l'émetteur 4 est associé à une mémoire 14 dans laquelle est enregistrée la description mathématique $F_K$ de la fonction cryptographique. Une description mathématique est un ensemble d'informations déterminant la suite exacte d'opérations mathématiques à effectuer pour calculer, pour toute valeur d'entrée, la valeur de sortie correspondante de cette fonction, sans qu'aucune autre valeur que la valeur d'entrée de la fonction n'ait à être fournie au programme pour effectuer les calculs. Cette description $F_K$ est enregistrée dans la mémoire 14 dans un format directement exploitable par l'émetteur pour que le module 12 puisse réaliser, à partir de cette description, sa fonction cryptographique. Par exemple, ici, la description $F_K$ est une suite d'instructions formant un programme informatique. Toutefois, dans la suite de cette description, les descriptions mathématiques des fonctions seront uniquement représentées sous la forme de relations mathématiques exprimées à l'aide de symboles conventionnels. En effet, le ou les programmes informatiques correspondant aux relations mathématiques décrites par la suite sont aisément réalisables.

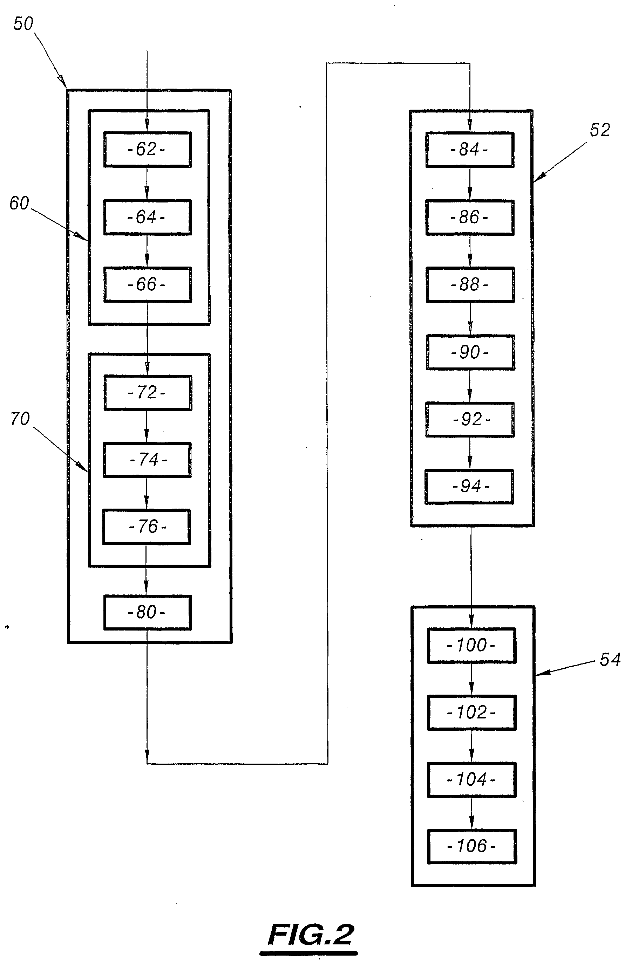

La description $F_K$ sera décrite plus en détail en regard de la figure 2.

Le module 10 est apte à exécuter une fonction de chiffrement E paramétrée par le mot de contrôle $CW_a$ construit par le module 12, pour chiffrer le contenu $B_a$ et délivrer en sortie un contenu chiffré $CB_a$ correspondant. La fonction de chiffrement E est ici une fonction de chiffrement conventionnelle inversible. Par exemple, il s'agit de l'algorithme de chiffrement AES (Advanced Encryption Standard) ou de l'algorithme de chiffrement connu sous le terme de "one time pad".

Pour chaque contenu $B_a$ chiffré à l'aide du mot de contrôle $CW_a$ par le module 10, l'émetteur 4 est apte à diffuser vers l'ensemble des décodeurs du système, un couple d'informations. Ce couple d'informations est formé par l'en-tête $EB_a$ et par le contenu chiffré $CB_a$.

Pour déchiffrer les informations transmises ou diffusées par l'émetteur 4 au travers du réseau 6, le décodeur 8 comporte un module 20 de calcul du mot de contrôle $CW_a$ et un module 22 de déchiffrement du contenu chiffré $CB_a$.

Le module 20 est apte à exécuter une fonction cryptographique. Cette fonction est définie par une description mathématique $F_{Kj}$ différente de la description $F_K$. Plus précisément cette description $F_{Kj}$ est différente de toutes les descriptions $F_{Kj}$ mises en oeuvre dans les autres décodeurs du système 2. Toutefois, bien que la description mathématique $F_{Kj}$ soit différente de la description $F_K$, la fonction qu'elle définit est la même. Par conséquent, la transformation de l'en-tête $EB_a$ par le module 20 permet d'obtenir le mot de contrôle $CW_a$, c'est-à-dire le même que celui qui aurait été obtenu à l'aide du module 12. Dans ces conditions, la description $F_{Kj}$ est dite équivalente à la description $F_K$.

De façon similaire à l'émetteur 4, le décodeur 8 est associé à une mémoire 21 dans laquelle est enregistrée la description mathématique $F_{Kj}$.

La description $F_{Kj}$ sera décrite plus en détail en regard de la figure 2.

Le module 22 est apte à exécuter une fonction de déchiffrement D. Cette fonction D est l'inverse de la fonction E et permet donc de déchiffrer le contenu $CB_a$, à l'aide du mot de contrôle $CW_a$ construit par le module 20 à partir de l'en-tête reçu $EB_a$.

Le décodeur 8 est également propre à transmettre le contenu $B_a$ déchiffré par le module 22 à un poste de télévision 26 sur lequel il sera affiché en clair.

L'émetteur 4 et chacun des décodeurs sont réalisés à partir de calculateurs programmables conventionnels aptes à exécuter des instructions enregistrées sur un support d'enregistrement d'informations. A cet effet, les mémoires 14 et 21 contiennent, en plus des paramètres secrets pour chiffrer et déchiffrer les informations transmises, des instructions pour l'exécution du procédé de la figure 2.

Le fonctionnement du système 2 va maintenant être décrit en regard du procédé de la figure 2.

Le procédé de la figure 2 se décompose en trois phases principales. Une phase 50 d'initialisation du système 2, une phase 52 d'utilisation du système 2 et finalement une phase 54 de recherche d'un traître parmi les différents utilisateurs légitimes du système 2.

La phase 50 débute par une étape 60 de construction de la description mathématique $F_K$. A cet effet, r fonctions non linéaires $g_i$ sont construites, lors d'une opération 62, r étant un nombre entier strictement positif. Le nombre r de

fonctions $g_i$ est choisi de manière à vérifier la relation suivante :

$$(1) \quad N < r!$$

où N est le nombre de décodeurs du système 2.

Ces fonctions $g_i$ sont construites de manière à être commutatives entre elles, par l'opération de composition, de telle sorte que la relation suivante est vérifiée :

$$(2) \quad \forall i, l \in \{1, ..., r\}, i \neq l \quad g_i \circ g_l = g_l \circ g_i$$

où le symbole o représente l'opération de composition de deux fonctions mathématiques.

Ici, chacune de ces fonctions est une fonction non linéaire transformant un n - uplet en un autre n - uplet. Par n - uplet on désigne ici un ensemble de n éléments. Par exemple l'ensemble des n coefficients d'un polynôme de degré (n-1) peut être vu comme un n - uplet.

Ainsi, chaque fonction $g_i$ admet n variables d'entrée et restitue en sortie n variables calculées. Elles correspondent, ici, chacune à un système de n équations non linéaires à n variables. n est un entier strictement positif qui correspond ici au nombre de caractères de l'en-tête $EB_a$.

Ici, chaque fonction $g_i$ est choisie pour former un bloc de chiffrement $G_i$ d'un algorithme de chiffrement multivariables lorsqu'elle est composée à droite et à gauche avec des fonctions linéaires. Un exemple d'algorithme de chiffrement multivariables est, par exemple, l'algorithme C* proposé par Matsumoto et Imai dans (Tsutomu Matsumoto and Hideki Imai, Public Quadratic Polynomial-tuples for Efficient Signature Vérification and Message Encryption, Advances in Cryptology - EUROCRYPT '88 (Cristoph G. Günther, e d.); Lecture Notes in Computer Science, vol. 330, Springer, 1988, pp. 419 - 453). D'autres exemples d'algorithmes de chiffrement multivariables sont les algorithmes connus sous les termes de SFLASH v2 (Le projet NESSIE, New European Schemes for Signatures, integrity and Encryption) et HFE (PATARIN Jacques Hidden Fields Equations (HFE) and Isomorphisms of Polynomyals (IP) : two new families of Asymmetric Algorithms - Eurocrypt 96, Springer Verlag, pp. 33-48).

De manière à obtenir à partir des $g_i$ une description à la fois simple et compacte des blocs de chiffrement $G_i$ qui en découlent, les fonctions $g_i$ sont choisies comme étant des fonctions monomiales, appelées monomes.

Ici, à titre d'exemple, chacune des fonctions $g_i$ opère sur les éléments d'une extension L' de degré n d'un corps de base L à q éléments. Par exemple, ici, q = 2 et $L = \{0,1\}$

L'extension L' est représentée comme l'ensemble des polynomes de la forme :

$$\sum_{i=0}^{n-1} a_i X^i$$

où :

- les coefficients sont des éléments du corps L,
- l'indice i est un entier, et
- X est une variable.

L'extension L' est munie de l'addition de polynomes et de la multiplication modulo un polynome irréductible de degré n défini par la relation suivante : $P(X) = \sum_{i=0}^{n-1} p_i X^i$ où :

- les coefficients $p_i$ sont des éléments prédéfinis du corps L, et,
- X est une variable.

A titre d'exemple, les fonctions $g_i$ sont des fonctions de l'extension L' dans l'extension L' de la forme : $g_i(a) = a^{e_i}$ où :

- a est un élément de l'extension L', et
- l'exposant $e_i$ est un entier prédéfini de la forme

$1+q^{\theta 1} +...+q^{\theta i} +...+q^{\theta d-1}$, où q est le nombre d'éléments du corps L et les exposants $\theta_i$ sont des entiers prédéfinis.

Ici, d est choisi égal à 2 de sorte que l'exposant $e_i$ de chacune des fonctions $g_i$ est de la forme $1 + q^{\theta 1}$

L'avantage d'un exposant $e_i$ de cette forme est que si l'on identifie chaque élément a de l'extension L' aux n - uplets $(a_o, a_1,..., a_{n-1})$ de coefficients, chacun des coefficients $b_o$, $b_{1,...,}b_{n-1}$ de l'élément b de l'extension L' défini par la relation $b = g_i(a)$ s'écrit comme une fonction de degré seulement d des coefficients $a_o$, $a_1$,..., $a_{n-1}$ de a. C'est-à-dire, ici, comme une fonction quadratique dans le cas particulier où d est égal à 2. Dans ce cas particulier, chaque coefficient $b_i$ peut s'écrire sous la forme de la fonction quadratique suivante :

$$b_i = (c_o\, a_o + ...+ c_{n-1}\, a_{n-1}) + (c_{0,1}\, a_o\, a_1 + ... + c_{o,n-1}\, a_o\, a_{n-1}) + (c_{1,2}\, a_1\, a_2 + ... + {}_{c1,n-1}\, a_1$$

$$a_{n-1}) + ... + c_{n-2,n-1}\, a_{n-2}\, a_{n-1}$$

où les n coefficients $c_u$ et les $n(n-1)/2$ coefficients $c_{u,v}$ sont des constantes appartenant au corps L.

Ainsi, grâce à la forme de l'exposant choisi, la description mathématique de chaque fonction $g_i$ est compacte et aisément enregistrable dans une mémoire.

Ensuite, lors d'une opération 64, deux fonctions S et T de $L^n$ sur $L^n$ sont choisies, où $L^n$ est l'ensemble des n - uplets formés d'éléments du corps L. De préférence, ces fonctions S et T sont des fonctions inversibles linéaires.

Par exemple, la description mathématique de chacune de ces fonctions S et T est une matrice de n éléments par n éléments, chacun de ces éléments appartenant au corps L.

Ensuite, la description $F_K$ est construite lors d'une opération 66, en composant les fonctions $g_i$ et les fonctions S et T de la façon suivante :

$$(3) \qquad F_K = T o\, g_r o\, g_{r-1} o \; .... \; o g_2\, o g_1 o S.$$

Après avoir construit la description $F_K$, le procédé se poursuit par une étape 70 de construction pour chaque décodeur de la description équivalente $F_{Kj}$.

Lors de cette étape 70, pour chaque décodeur j du système, une permutation $\sigma_j$ unique de l'ensemble {1,2, ..., r } sur lui-même est définie lors d'une opération 72. Cette permutation $\sigma_j$ est, par exemple, soit construite par tirage au sort, soit déduite à partir de l'indice j identifiant le décodeur et d'un paramètre secret M.

On notera qu'il est possible de construire une permutation unique pour chaque décodeur du système car la relation (1) est vérifiée.

Ensuite, lors d'une opération 74, r-1 bijections $f_{i,j}$ sont choisies pour l'utilisateur j. Chacune de ces bijections $f_{i,j}$ est une fonction inversible de l'ensemble $L^n$ sur lui-même. Ces bijections $f_{i,j}$ sont, par exemple, décrites à l'aide d'une matrice de n éléments par n éléments, chacun de ces éléments appartenant au corps L.

Par exemple, lors de cette opération 74, les bijections $f_{i,j}$ sont choisies par tirage au sort dans l'ensemble des applications linéaires inversibles de l'ensemble $L^n$ dans lui-même. Une autre possibilité est de déduire chacune de ces bijections $f_{i,j}$ à partir de l'indice j du décodeur et du paramètre secret M.

Finalement, lors d'une opération 76, la description mathématique $F_{Kj}$ est construite. A cet effet, r fonctions élémentaires $G_{i,j}$ sont construites pour le décodeur j. Ces fonctions $G_{i,j}$ sont construites en composant les fonctions S, T, $f_{i,j}$ et $g_i$ de la façon suivante :

$$(4) \qquad G_{1,j} = f_{1,j}^{-1} \, o g_{\sigma j\,(1)}\, o S$$

$$G_{2,j} = f_{2,j}^{-1} \, o g_{\sigma j\,(2)}\, o f_{1,j}$$

$$.........................................$$

$$G_{r-1,j} = f_{r-1,j}^{-1} \, o g_{\sigma j\,(r-1)}\, o f_{r-2,j}$$

$$G_{r,j} = T o g_{\sigma j\,(r)}\, f_{r-1,j}$$

où

- $f^{-1}_{i,j}$ est l'inverse de la bijection $f_{i,j}$, et
- $g_{\sigma j(t)}$), et la fonction $g_i$ dont l'indice i est égal au permuté de l'indice t par la permutation $\sigma_j$ de l'utilisateur j, t appartenant à l'ensemble {1, 2, ..., r}.

La propriété de la fonction $g_i$ selon laquelle chaque coefficient $b_i$ de l'élément b de l'extension L' défini par la relation $b = g_i (a)$ peut s'écrire comme un polynome de degré seulement d est conservée lorsque la fonction $g_i$ est composée à droite et à gauche par des bijections ou fonctions linéaires. Par conséquent, les composantes de l'élément y de $L^n$ défini par la relation $y = G_{i,j} (x)$ peuvent être décrites par un polynome de degré seulement d des composantes $x_i$ de l'élément x de $L^n$. Par exemple, lorsque d est égal à 2, la composante $y_i$ est définie à l'aide de la description mathématique suivante :

$$y_i = (c'_o \ x_o + \ldots + c'_{n-1} \ x_{n-1}) + (c'_{0,1} \ x_o \ x_1 + \ldots + c'_{o,n-1} \ x_o \ x_{n-1}) + (c'_{1,2} \ x_1 \ x_2 + \ldots + c'_{1,n-1} \ x_1 \ x_{n-1}) + \ldots + c'_{n-2,n-1} \ x_{n-2} \ x_{n-1}$$

où les n coefficients $c'_u$ et les n (n-1)/2 coefficients $c'_{u,v}$ sont des constantes appartenant au corps L.

Ainsi, grâce au choix d'exposant $e_i$ de la forme $1 + q^{\theta 1}$, la description mathématique de chaque fonction élémentaire $G_{i,j}$ est simple et compacte et occupe donc peu de place dans une mémoire. En particulier, dans le mode de réalisation décrit ici, la description mathématique de chaque fonction élémentaire $G_{i,j}$ est un système de n équations non linéaires à n variables.

La description $F_{Kj}$ est formée par ces r fonctions élémentaires $G_{i,j}$. En effet, en traitant un message d'entrée à l'aide de la relation (5) : $F_{Kj} = G_{r,j} \ o \ G_{r-1,j} \ o \ldots o G_{2,j} \ o G_{1,j}$ on obtient exactement le même message de sortie que celui qui aurait été obtenu à l'aide de la description $F_K$. L'équivalence des descriptions mathématique $F_{Kj}$ et $F_K$ est aisée à vérifier en remplaçant dans la relation précédente chaque fonction élémentaire $G_{i,j}$ par sa définition donnée par la relation (4). En faisant celà dans la relation précédente, on obtient :

$$F_{Kj} = T o \ g_{\sigma j(r)} o g_{\sigma j(r-1)} o \ldots o g_{\sigma j(2)} \ o g_{\sigma j(1)} \ o S$$

Puisque l'ensemble des fonctions $g_i$ sont commutatives entre elles, on démontre ainsi que la description $F_{Kj}$ est équivalente à la description $F_K$.

On comprend donc que la fonction des bijections $f_{i,j}$ est de rendre non commutatives entre elles les fonctions élémentaires $G_{i,j}$. Dès lors, pour obtenir une description équivalente à la description $F_K$, les fonctions élémentaires $G_{i,j}$ ne peuvent être composées les unes avec les autres que dans l'ordre croissant de leur indice i comme dans la relation (5).

De plus, la robustesse du système contre toute tentative de cryptanalyse repose, dans le mode de réalisation particulier décrit ici, sur la difficulté du problème d'isomorphisme de polynôme également connu sous le terme de problème IP. En effet, connaissant les fonctions $G_{i,j}$, il est mathématiquement très difficile, même en connaissant l'ensemble des fonctions $g_1$ à $g_r$ d'identifier les valeurs $\sigma_j(i)$ puisque des fonctions inconnues sont utilisées dans chaque fonction élémentaire $G_{i,j}$ pour les camoufler par composition à droite et à gauche. Ici, ces fonctions inconnues sont les fonctions S et T qui sont gardées secrètes et les bijections $f_{i,j}$. Dès lors, il n'est pas possible pour un utilisateur illicite en possession d'un jeu de fonctions élémentaires $G_{i,j}$ valides, de construire un nouveau jeu de fonctions élémentaires $G'_{i,j}$ dans lequel la relation d'ordre définie par $\sigma_j$ entre les fonctions $g_i$ n'est pas conservée. Autrement dit, puisque l'utilisateur illicite n'est pas capable de retrouver les fonctions S, T et $f_{i,j}$ à partir des fonctions élémentaires $G_{i,j}$, il doit se contenter de modifier la description mathématique de chaque fonction élémentaire $G_{i,j}$, sans pour autant pouvoir modifier l'ordre dans lequel ces fonctions élémentaires doivent être combinées. Ainsi, puisque l'ordre dans lequel les fonctions élémentaires $G'_{i,j}$ sont combinées n'est pas modifié, l'ordre dans lequel les fonctions $g_i$ sont combinées n'est pas non plus modifié. L'intérêt de cette propriété apparaîtra à la lecture de la suite de la description.

Une fois les fonctions élémentaires $G_{i,j}$ construites pour chaque utilisateur j du système 2, celles ci sont distribuées et enregistrées, lors d'une étape 80, dans la mémoire 21 de chaque décodeur 8, sous la forme, par exemple, d'un programme informatique.

De plus, lors de cette étape 80, des informations nécessaires en vue d'exécuter la phase 54 de recherche d'un traître sont, par exemple, enregistrées dans la mémoire 14. En particulier, l'ensemble des fonctions utilisées pour construire chaque fonction élémentaire $G_{i,j}$ est enregistré dans cette mémoire 14 ainsi que chacune des permutations $\sigma_j$ utilisées. La relation entre chaque permutation $\sigma_j$ et le décodeur pour lequel elle a été utilisée est enregistrée. De même, une relation permettant d'identifier un utilisateur à partir de l'identité du décodeur est enregistrée dans cette mémoire 14.

Une fois que les fonctions $G_{i,j}$ ont été enregistrées dans la mémoire de chaque décodeur 8, la phase 52 d'utilisation du système 2 peut débuter.

Lors de cette phase 52, l'émetteur 4 tire au sort, lors d'une étape 84, à intervalle régulier, par exemple toutes les secondes, un nouvel en-tête $EB_a$.

Cet en-tête $EB_a$ est transformé, lors d'une étape 86, à l'aide de la description $F_K$, par le module 12 afin d'obtenir le mot de contrôle $CW_a$.

Ensuite, le contenu $B_a$ est chiffré par le module 10, lors d'une étape 88, à l'aide de la fonction E et du mot de contrôle $CW_a$. Le contenu ainsi chiffré $CB_a$ et l'en-tête $EB_a$ utilisé à cet effet sont alors diffusés conjointement, lors d'une étape 90, par l'émetteur 4, au travers du réseau 6 et à destination de l'ensemble des décodeurs du système 2.

Lors de la réception des informations chiffrées, chaque décodeur procède d'abord à une étape 92 de calcul du mot de contrôle $CW_a$ à partir de l'en-tête reçu $EB_a$. Lors de cette étape, le module 20 utilise successivement et dans l'ordre chacune des fonctions élémentaires $G_{i,j}$ enregistrées dans sa mémoire 21, de manière à effectuer le calcul correspondant à la composée des fonctions élémentaires $G_{i,j}$ selon la relation (5).

A l'issue de cette étape 92, le module 20 délivre en sortie le même mot de contrôle $CW_a$ que celui construit par le module 12 de l'émetteur 4.

A l'aide de ce mot de contrôle $CW_a$ et de la fonction D, le module 22 déchiffre, lors d'une étape 94, le contenu chiffré reçu $CB_a$. Le contenu déchiffré $B_a$ délivré par le module 22 est alors transmis pour affichage en clair, par exemple, sur le poste de télévision 26.

Les étapes 84 à 94 sont réitérées pendant toute la phase d'utilisation du système 2 pour chaque information ou trame d'informations diffusée par l'émetteur 4.

Pour la suite de la description, il est supposé que l'utilisateur du décodeur j a transmis à un utilisateur illicite son jeu de fonctions élémentaires $G_{i,j}$, de manière à ce que cet utilisateur illicite puisse utiliser un décodeur pirate pour déchiffrer les informations diffusées par l'émetteur 4, sans avoir à payer, par exemple, un abonnement. L'utilisateur du décodeur j est donc le traître puisqu'il a transmis illégalement et illicitement les informations secrètes permettant de déchiffrer les informations diffusées par l'émetteur 4.

La phase 54 de recherche du traître débute par la saisie et l'analyse, lors d'une étape 100, du décodeur pirate de l'utilisateur illicite. Lors de cette étape 100, l'analyse du décodeur est réalisée de manière à retrouver dans celui-ci les fonctions élémentaires $G_{i,j}$ qui lui ont été communiquées illicitement par le traître, ainsi que l'ordre dans lequel ces fonctions $G_{i,j}$ sont combinées pour transformer l'en-tête $EB_a$ reçu en un mot de contrôle $CW_a$.

Les fonctions élémentaires retrouvées dans le décodeur pirate sont notées ici $G_{i,p}$ où l'indice i indique l'ordre dans lequel ces fonctions élémentaires sont utilisées pour transformer le mot de contrôle $EB_a$.

Ensuite, chaque fonction $G_{i,p}$ est analysée lors d'une étape 102 pour retrouver la fonction $g_i$, à partir de laquelle elle a été construite. Une telle analyse est possible, par exemple, pour l'opérateur du système 2, puisque celui-ci connaît les fonctions S, T, $f_{i,j}$ et $g_i$ utilisées pour construire les fonctions élémentaires $G_{i,j}$ de chaque utilisateur du système.

Ainsi, à l'issue de l'étape 102, l'opérateur du système 2 est capable de dire que la fonction élémentaire $G_{1,p}$ a été construite à partir de la fonction $g_m$, que la fonction élémentaire $G_{2,p}$ a été construite à partir de la fonction $g_n$ et ainsi de suite pour chacune des fonctions $G_{i,p}$, où les indices m et n des fonctions $g_m$ et $g_n$ représentent l'indice de la fonction $g_i$ utilisée pour construire respectivement $G_{1,p}$ et $G_{2,p}$.

A partir de ces informations, l'opérateur est donc capable de reconstruire, lors d'une étape 104 la permutation $\sigma_j$ utilisée lors de la construction des fonctions élémentaires $G_{i,p}$ utilisées dans le décodeur pirate. Une fois cette permutation $\sigma_j$ reconstruite, celle-ci est comparée, lors d'une étape 106, aux différentes permutations enregistrées dans la mémoire 14, lors de l'étape 80.

Grâce à cela, le traître, c'est à dire ici l'utilisateur du décodeur j, est identifié, puisque dans le système 2, chaque permutation $\sigma_j$ correspond à un seul décodeur, lui-même associé à un seul utilisateur.

Ce système et ce procédé s'avèrent donc particulièrement dissuasifs pour empêcher des utilisateurs légitimes de communiquer les informations nécessaires au déchiffrement des contenus chiffrés $CB_a$.

Des études de robustesse du procédé de la figure 2 contre des tentatives de crypt-analyses ont été menées. Ces études ont montré, en particulier, que le système et le procédé de la figure 2 résistent à des attaques menées par une coalition de k traîtres, k étant un entier positif supérieur à deux. Par coalition de k traîtres, on désigne ici un groupe de k utilisateurs légitimes qui essaient de construire, en mettant en commun leurs jeux respectifs de fonctions élémentaires $G_{i,j}$ une nouvelle description équivalente de la fonction $F_K$. Il a été montré que ces utilisateurs illicites peuvent au mieux construire à partir de ces k jeux de fonctions élémentaires $G_{i,j}$, une fonction faisant intervenir un ou plusieurs nouveaux jeux de fonctions élémentaires $G_{i,p}$. Toutefois, tout nouveau jeu de fonctions élémentaires $G_{i,p}$ résulte de la combinaison de séquences successives de fonctions élémentaires $G_{i,j}$ extraites dans chacun des jeux de fonctions élémentaires à sa disposition. Par exemple, dans le cas d'une coalition de deux traîtres, le nouveau jeu de fonctions élémentaires $G_{i,p}$ que pourrait construire un utilisateur illicite, se composerait des p premières fonctions élémentaires $\{G_{1,1}, G_{2,1}, ..., G_{p,1}\}$ du premier traître et des r-p dernières fonctions élémentaires $\{G_{p+1,2}, ..., G_{r,2}\}$ du second traître.

Pour lutter contre une telle tentative de camouflage de l'identité du traître, le nombre r de fonctions $g_i$ sera choisi suffisamment grand pour qu'au moins un traître puisse être identifié uniquement à partir de l'identification, lors de la phase 54, d'une partie seulement de la permutation $\sigma_j$ qui a été utilisée pour construire son jeu de fonctions élémentaires $G_{i,j}$. Par exemple, dans le cas de la coalition de deux traîtres, r sera choisi suffisamment grand pour qu'au moins un des deux traîtres puisse être identifié soit à partir des p premières fonctions élémentaires $G_{i,1}$ soit à partir des r-p dernières fonctions élémentaires $G_{i,2}$.

On remarquera que dans le procédé ci-dessus, les mêmes informations secrètes, c'est-à-dire ici les fonctions cryptographiques associées aux descriptions $F_K$, $F_{Kj}$ sont utilisées pour chiffrer et déchiffrer, de sorte que le procédé de chiffrement décrit présente les mêmes caractéristiques qu'un algorithme de chiffrement symétrique. En particulier, grâce à cette propriété, le procédé décrit ici est plus rapide qu'un algorithme de chiffrement asymétrique.

Ici, les fonctions S, T, $f_{i,j}$, doivent être gardées secrètes, tandis que les fonctions $g_i$ sont éventuellement publiques.

Dans le système 2, seule une même fonction de calcul du mot de contrôle $CW_a$ est utilisée aussi bien dans l'émetteur 4 que dans les décodeurs. Dès lors, cette fonction cryptographique n'a pas besoin d'être inversible ce qui facilite le choix et la construction des fonctions $g_i$. Toutefois, en variante, la description $F_K$ correspond à une fonction de chiffrement et les descriptions $F_{Kj}$ correspondent à l'inverse de cette fonction de chiffrement. Dans cette variante, les différentes descriptions, $F_{Kj}$ implantées dans les différents décodeurs du système sont équivalentes les unes des autres et sont des descriptions équivalentes de l'inverse de la fonction définie par la description $F_K$. Ce qui a été précédemment décrit pour construire les descriptions $F_{Kj}$ s'applique, à la différence près que les fonctions $g_i$ doivent être inversibles dans cette variante. Dans ce cas, la description $F_K$ est, par exemple, utilisée, pour chiffrer directement le contenu $B_a$ tandis que les descriptions équivalentes $F_{Kj}$ sont utilisées pour déchiffrer directement les contenus chiffrés $CB_a$.

Ici, la fonction cryptographique correspondant aux descriptions $F_K$ et $F_{Kj}$ transforme un message initial codé sur n caractère en un message transformé codé également sur le même nombre de caractères. Cette fonction cryptographique n'augmente pas la taille du message transformé par rapport à celle du message initial contrairement à ce qui est constaté, par exemple, dans le cas des algorithmes asymétriques. En variante, la fonction cryptographique augmente la taille du message transformé par rapport à celle du message initial. On remarquera cependant que dans cette variante cette augmentation en taille reste indépendante du nombre de traîtres.

Le système 2 a été décrit dans le cas particulier où une description $F_{Kj}$ est associée à un unique décodeur. En variante, une même description $F_{Kj}$ est associée à un groupe de décodeurs. Dans cette variante, l'ensemble des décodeurs du système 2 sont regroupés en plusieurs groupes, de sorte que la description $F_{Kj}$ identifie non pas un décodeur particulier mais le groupe auquel appartient ce décodeur particulier.

## Revendications

1. Procédé traçable de chiffrement et/ou de déchiffrement d'informations diffusées par au moins un émetteur vers plusieurs décodeurs, ce procédé permettant d'identifier parmi différents utilisateurs légitimes des décodeurs, un traître qui a communiqué à un tiers non autorisé des informations secrètes de manière à ce que ce tiers puisse chiffrer et/ou déchiffrer les informations diffusées par l'émetteur,
dans lequel :

   - lors du chiffrement des informations diffusées, l'émetteur met en oeuvre (en 86) au moins une première fonction cryptographique secrète, et
   - lors du déchiffrement de ces informations diffusées, tous les décodeurs mettent en oeuvre (en 92) au moins une même seconde fonction cryptographique secrète identique à ladite première fonction ou à son inverse, chaque décodeur faisant appel à cet effet à une description mathématique de ladite seconde fonction enregistrée dans une mémoire (21),

   **caractérisé en ce que**, la première fonction correspond à une composition de r fonctions non linéaires commutatives entre elles, lors de la mise en oeuvre (en 92) de la seconde fonction, la description mathématique de cette seconde fonction à laquelle chaque décodeur fait appel est différente d'un décodeur à l'autre ou d'un groupe de décodeurs à l'autre de manière à ce que la description mathématique à laquelle il est fait appel identifie de façon unique le décodeur ou un groupe de décodeurs particulier parmi l'ensemble des décodeurs,
   et **en ce que** ladite description mathématique (FKj) enregistrée dans la mémoire de chaque décodeur est formée de r fonctions élémentaires (Gi,j) qui doivent être composées les unes avec les autres dans un ordre déterminé pour former ladite seconde fonction secrète, l'ensemble desdites fonctions élémentaires étant construit à partir d'une permutation unique de l'ensemble des fonctions composant la première fonction.

**2.** Procédé selon la revendication 1, **caractérisé en ce que** la seconde fonction cryptographique est apte à traiter des informations non redondantes.

**3.** Procédé selon la revendication 1 ou 2, **caractérisé en ce que** chaque fonction élémentaire ($G_{i,j}$) est égale à la composée d'au moins trois fonctions selon l'une des relations suivantes :

$$G_{1,j} = f'_{1,j} \circ g_{\sigma j (1)} \circ S$$
$$G_{2,j} = f'_{2,j} \circ g_{\sigma j (2)} \circ f_{1,j}$$
$$\dots\dots\dots\dots\dots\dots\dots\dots\dots$$
$$G_{r-1,j} = f'_{r-1,j} \circ g_{\sigma j (r-1)} \circ f_{r-2,j}$$
$$G_{r,j} = T \circ g_{\sigma j (r)} \circ f_{r-1,j}$$

où :

- $G_{i,j}$ est la ième fonction élémentaire du décodeur j, j étant un indice identifiant un décodeur ou un groupe de décodeurs
- les fonctions $f_{i,j}$ et $f'_{i,j}$ sont des fonctions prédéfinies aptes à rendre non commutatives entre elles les fonctions élémentaires $G_{i,j}$
- $\sigma_j$ est une permutation de l'ensemble d'indices {1 ; ... ; r} unique pour chaque décodeur ou groupe de décodeurs
- $g_{\sigma j(t)}$ est la $\sigma_{j(t)}$ ième fonction d'un ensemble prédéfini formé de r fonctions prédéfinies $g_i$ non linéaires commutatives entre elles, et
- S et T sont des fonctions prédéfinies aptes à rendre difficile la cryptanalyse des fonctions élémentaires respectivement $G_{1,j}$ et $G_{r,j}$.

**4.** Procédé selon la revendication 3, **caractérisé en ce que** chaque fonction $f'_{i,j}$ est égale à l'inverse $f_{i,j}^{-1}$ de la fonction $f_{i,j}$.

**5.** Procédé selon la revendication 3 ou 4, **caractérisé en ce que** les fonctions $f_{i,j}$ sont des fonctions linéaires d'un ensemble ($L^n$) des n-uplets d'éléments d'un corps fini (L) sur lui-même.

**6.** Procédé selon l'une quelconque des revendications 3 à 5, **caractérisé en ce que** les fonctions S et T sont inversibles.

**7.** Procédé selon l'une quelconque des revendications 3 à 6, **caractérisé en ce que** les fonctions S et T sont des fonctions linéaires d'un ensemble ($L^n$) des n-uplets d'éléments d'un corps fini (L) vers lui-même.

**8.** Procédé selon l'une quelconque des revendications 3 à 7, **caractérisé en ce que** les fonctions $g_i$ sont choisies de manière à ce que chaque fonction élémentaire $G_{i,j}$ corresponde à un bloc de chiffrement d'un algorithme de chiffrement multivariables.

**9.** Procédé selon l'une quelconque des revendications 3 à 8, **caractérisé en ce que** chaque fonction $g_i$ est de la forme $g_i (a) = a^{ei}$, où a est un élément d'une l'extension L' de degré n d'un corps de base L à q éléments, et $e_i$, est un exposant prédéfini.

**10.** Procédé selon la revendication 9, **caractérisé en ce que** l'exposant $e_i$ est de la forme $1 + q^{\theta 1} + \dots + q^{\theta i} + \dots + q^{\theta d - 1}$ , où les exposants $\theta_i$ sont des entiers prédéfinis.

**11.** Support d'enregistrement d'informations (21), **caractérisé en ce qu'**il comporte des instructions pour l'exécution d'un procédé traçable de chiffrement et/ou de déchiffrement selon l'une quelconque des revendications précédentes, lorsque ces instructions sont exécutées par un décodeur.

**12.** Support d'enregistrement d'informations (14), **caractérisé en ce qu'**il comporte des instructions pour l'exécution d'un procédé traçable de chiffrement et/ou de déchiffrement d'informations selon l'une quelconque des revendications 1 à 9, lorsque lesdites instructions sont exécutées par un émetteur.

**13.** Système traçable de chiffrement et/ou de déchiffrement d'informations diffusées apte à permettre l'identification, parmi différents utilisateurs légitimes, d'un traître qui a communiqué à un tiers non autorisé des informations secrètes de manière à ce que ce tiers puisse chiffrer et/ou déchiffrer les informations diffusées, ce système comportant :

- un émetteur (4) propre à chiffrer les informations diffusées, cet émetteur étant apte à mettre en oeuvre au moins une première fonction cryptographique secrète pour traiter directement un message, puis à diffuser le message,
- plusieurs décodeurs (8) propres à déchiffrer les informations diffusées, tous les décodeurs étant aptes à mettre en oeuvre une même seconde fonction cryptographique secrète identique à ladite première fonction ou à son inverse pour traiter directement ledit message diffusé, à cet effet, chaque décodeur étant équipé d'une mémoire (21) dans laquelle est enregistrée une description mathématique de ladite seconde fonction;

**caractérisé en ce que**, la première fonction correspond à une composition de r fonctions non linéaires commutatives entre elles, la mémoire (21) de chaque décodeur contient une description mathématique de ladite seconde fonction différente de celle enregistrée dans la mémoire des autres décodeurs ou dans la mémoire des autres groupes de décodeurs de manière à ce que cette description mathématique identifie de façon unique le décodeur ou un groupe de décodeurs particulier parmi l'ensemble des décodeurs, et **en ce que** ladite description mathématique (FKj) enregistrée dans la mémoire de chaque décodeur est formée de r fonctions élémentaires (Gi,j) qui doivent être composées les unes avec les autres dans un ordre déterminé pour former ladite seconde fonction secrète, l'ensemble desdites fonctions élémentaires étant construit à partir d'une permutation unique de l'ensemble des fonctions composant la première fonction.

**14.** Mémoire (21) destinée à être associée à un décodeur (8) d'un système traçable de chiffrement et/ou de déchiffrement d'informations selon la revendication 13, **caractérisée en ce qu'**elle comporte une description mathématique équivalente de ladite seconde fonction secrète propre à être utilisée par le décodeur, cette description mathématique se composant de plusieurs fonctions élémentaires ($G_{i,j}$) dont chacune est égale à la composée d'au moins trois fonctions selon l'une des relations suivantes :

$$G_{1,j} = f_{1,j} \text{ og}_{\sigma j\,(1)} \text{ oS}$$
$$G_{2,j} = f_{2,j} \text{ og}_{\sigma j\,(2)} \text{ of}_{1,j}$$
$$\dots\dots\dots\dots\dots\dots\dots\dots\dots\dots\dots$$
$$G_{r-1,j} = f_{r-1,\,j} \text{ og}_{\sigma j\,(r-1)} \text{ of}_{r-2,j}$$
$$G_{r,\,j} = \text{Tog}_{\sigma j\,(r)} \text{ of}_{r-1,j}$$

où :

- $G_{i,j}$ est la ième fonction élémentaire du décodeur j, j étant un indice identifiant un décodeur ou un groupe de décodeurs
- les fonctions $f_{i,j}$ et $f_{i,j}$ sont des fonctions prédéfinies aptes à rendre non commutatives entre elles les fonctions élémentaires $G_{i,j}$
- $\sigma_j$ est une permutation de l'ensemble d'indices {1; ... ; r} unique pour chaque décodeur ou groupe de décodeurs
- $g_{\sigma j(t)}$ est la $\sigma_{j(t)}$ ième fonction d'un ensemble prédéfini formé de r fonctions prédéfinies $g_i$ non linéaires commutatives entre elles, et
- S et T sont des fonctions prédéfinies aptes à rendre difficiles la cryptanalyse des fonctions élémentaires respectivement $G_{1,j}$ et $G_{r,j}$.

**Patentansprüche**

**1.** Zum Aufspüren geeignetes Verfahren zur Verschlüsselung und/oder Entschlüsselung von Informationen, die von wenigstens einem Sender an mehrere Decoder rundgesendet werden, wobei dieses Verfahren ermöglicht, unter verschiedenen legitimen Benutzern der Decoder einen "Verräter" zu identifizieren, welcher einem nicht berechtigten Dritten geheime Informationen übermittelt hat, so dass dieser Dritte die von dem Sender rundgesendeten Informationen verschlüsseln und/oder entschlüsseln kann, wobei:

- bei der Verschlüsselung der rundgesendeten Informationen der Sender wenigstens eine erste geheime kryptographische Funktion ausführt (in 86), und

- bei der Entschlüsselung dieser rundgesendeten Informationen alle Decoder wenigstens eine, ein und dieselbe zweite geheime kryptographische Funktion ausführen (in 92), die mit der ersten Funktion oder mit deren inverser Funktion identisch ist, wobei jeder Decoder zu diesem Zweck auf eine mathematische Beschreibung der zweiten Funktion zurückgreift, die in einem Speicher (21) gespeichert ist,

**dadurch gekennzeichnet, dass** die erste Funktion einer Zusammensetzung von r nichtlinearen Funktionen entspricht, die miteinander kommutativ sind, bei der Ausführung (in 92) der zweiten Funktion die mathematische Beschreibung dieser zweiten Funktion, auf welche jeder Decoder zurückgreift, von einem Decoder zum anderen oder von einer Gruppe von Decodern zur anderen verschieden ist, derart, dass die mathematische Beschreibung, auf welche zurückgegriffen wird, auf eindeutige Weise den Decoder oder eine bestimmte Gruppe von Decodern aus der Menge der Decoder identifiziert,

und dadurch, dass die mathematische Beschreibung (FKj), die im Speicher jedes Decoders gespeichert ist, von r elementaren Funktionen (Gi,j) gebildet wird, welche in einer bestimmten Reihenfolge miteinander zusammengesetzt werden müssen, um die zweite geheime Funktion zu bilden, wobei die Menge der elementaren Funktionen aus einer eindeutigen Permutation der Menge der Funktionen, aus denen die erste Funktion zusammengesetzt ist, konstruiert wird.

2. Verfahren nach Anspruch 1, **dadurch gekennzeichnet, dass** die zweite kryptographische Funktion geeignet ist, nicht redundante Informationen zu verarbeiten.

3. Verfahren nach Anspruch 1 oder 2, **dadurch gekennzeichnet, dass** jede elementare Funktion ($G_{i,j}$) gleich der Zusammensetzung von wenigstens drei Funktionen ist, gemäß einer der folgenden Beziehungen:

$$G_{1,j} = f'_{1,j} \circ g_{\sigma_{j(1)}} \circ S$$
$$G_{2,j} = f'_{2,j} \circ g_{\sigma_{j(2)}} \circ f_{1,j}$$
$$\dots\dots\dots\dots\dots\dots\dots\dots\dots$$
$$G_{r-1,j} = f'_{r-1,j} \circ g_{\sigma_{j(r-1)}} \circ f_{r-2,j}$$
$$G_{r,j} = T \circ g_{\sigma_{j(r)}} \circ f_{r-1,j}$$

wobei:

- $G_{i,j}$ die i-te elementare Funktion des Decoders j ist, wobei j ein Index ist, der einen Decoder oder eine Gruppe von Decodern identifiziert,
- die Funktionen $f_{i,j}$ und $f'_{i,j}$ vordefinierte Funktionen sind, die in der Lage sind zu bewirken, dass die elementaren Funktionen $G_{i,j}$ nicht miteinander kommutativ sind,
- $\sigma_j$ eine Permutation der Menge von Indizes {1; ...; r} ist, die für jeden Decoder oder jede Gruppe von Decodern eindeutig ist,
- $g_{\sigma_{j(t)}}$ die $\sigma_{j(t)}$-te Funktion einer vordefinierten Menge ist, die von r vordefinierten nichtlinearen, miteinander kommutativen Funktionen $g_i$ gebildet wird, und
- S und T vordefinierte Funktionen sind, die in der Lage sind, die Kryptoanalyse der elementaren Funktionen $G_{1,j}$ bzw. $G_{r,j}$ zu verkomplizieren.

4. Verfahren nach Anspruch 3, **dadurch gekennzeichnet, dass** jede Funktion $f'_{i,j}$ gleich der Inversen $f_{i,j}^{-1}$ der Funktion $f_{i,j}$ ist.

5. Verfahren nach Anspruch 3 oder 4, **dadurch gekennzeichnet, dass** die Funktionen $f_{i,j}$ lineare Funktionen einer Menge ($L^n$) von n-Tupeln von Elementen eines endlichen Körpers (L) auf sich selbst sind.

6. Verfahren nach einem der Ansprüche 3 bis 5, **dadurch gekennzeichnet, dass** die Funktionen S und T invertierbar sind.

7. Verfahren nach einem der Ansprüche 3 bis 6, **dadurch gekennzeichnet, dass** die Funktionen S und T lineare

Funktionen einer Menge ($L^n$) von n-Tupeln von Elementen eines endlichen Körpers (L) auf sich selbst sind.

**8.** Verfahren nach einem der Ansprüche 3 bis 7, **dadurch gekennzeichnet, dass** die Funktionen $g_i$ so gewählt sind, dass jede elementare Funktion $G_{i,j}$ einem Verschlüsselungsblock eines Multivariablen-Verschlüsselungsalgorithmus entspricht.

**9.** Verfahren nach einem der Ansprüche 3 bis 8, **dadurch gekennzeichnet, dass** jede Funktion $g_i$ von der Form $g_i(a)$ = $a^{ei}$ ist, wobei a ein Element einer Erweiterung L' vom Grad n eines Basiskörpers L mit q Elementen ist und $e_i$ ein vordefinierter Exponent ist.

**10.** Verfahren nach Anspruch 9, **dadurch gekennzeichnet, dass** der Exponent $e_i$ von der Form $1+q^{\theta 1} + ...+q^{\theta i} +... +q^{\theta d-1}$ ist, wobei die Exponenten $\theta_i$ vordefinierte ganze Zahlen sind.

**11.** Informationsaufzeichnungsmedium (21), **dadurch gekennzeichnet, dass** es Anweisungen zur Ausführung eines zum Aufspüren geeigneten Verfahrens zur Verschlüsselung und/oder Entschlüsselung nach einem der vorhergehenden Ansprüche, wenn diese Anweisungen von einem Decoder ausgeführt werden, umfasst.

**12.** Informationsaufzeichnungsmedium (14), **dadurch gekennzeichnet, dass** es Anweisungen zur Ausführung eines zum Aufspüren geeigneten Verfahrens zur Verschlüsselung und/oder Entschlüsselung nach einem der Ansprüche 1 bis 9, wenn diese Anweisungen von einem Sender ausgeführt werden, umfasst.

**13.** Zum Aufspüren geeignetes System zur Verschlüsselung und/oder Entschlüsselung von rundgesendeten Informationen, das in der Lage ist, die Identifizierung eines "Verräters" unter verschiedenen legitimen Benutzern zu ermöglichen, welcher einem nicht berechtigten Dritten geheime Informationen übermittelt hat, so dass dieser Dritte die rundgesendeten Informationen verschlüsseln und/oder entschlüsseln kann, wobei dieses System umfasst:

- einen Sender (4), der dafür eingerichtet ist, die rundgesendeten Informationen zu verschlüsseln, wobei dieser Sender in der Lage ist, wenigstens eine erste geheime kryptographische Funktion auszuführen, um eine Nachricht direkt zu verarbeiten, und anschließend die Nachricht rundzusenden,
- mehrere Decoder (8), die dafür eingerichtet sind, die rundgesendeten Informationen zu entschlüsseln, wobei alle Decoder in der Lage sind, ein und dieselbe zweite geheime kryptographische Funktion auszuführen, die mit der ersten Funktion oder mit deren inverser Funktion identisch ist, um die rundgesendete Nachricht direkt zu verarbeiten, wobei zu diesem Zweck jeder Decoder mit einem Speicher (21) ausgestattet ist, in welchem eine mathematische Beschreibung der zweiten Funktion gespeichert ist,

**dadurch gekennzeichnet, dass** die erste Funktion einer Zusammensetzung von r nichtlinearen Funktionen entspricht, die miteinander kommutativ sind, der Speicher (21) jedes Decoders eine mathematische Beschreibung der zweiten Funktion enthält, die verschieden von derjenigen ist, die im Speicher der anderen Decoder oder im Speicher der anderen Gruppen von Decodern gespeichert ist, derart, dass diese mathematische Beschreibung auf eindeutige Weise den Decoder oder eine bestimmte Gruppe von Decodern aus der Menge der Decoder identifiziert, und dadurch, dass die mathematische Beschreibung (FKj), die im Speicher jedes Decoders gespeichert ist, von r elementaren Funktionen (Gi,j) gebildet wird, welche in einer bestimmten Reihenfolge miteinander zusammengesetzt werden müssen, um die zweite geheime Funktion zu bilden, wobei die Menge der elementaren Funktionen aus einer eindeutigen Permutation der Menge der Funktionen, aus denen die erste Funktion zusammengesetzt ist, konstruiert wird.

**14.** Speicher (21), welcher dazu bestimmt ist, einem Decoder (8) eines zum Aufspüren geeigneten Systems zur Verschlüsselung und/oder Entschlüsselung von Informationen nach Anspruch 13 zugeordnet zu werden, **dadurch gekennzeichnet, dass** er eine äquivalente mathematische Beschreibung der zweiten geheimen Funktion umfasst, die dafür eingerichtet ist, von dem Decoder verwendet zu werden, wobei sich diese mathematische Beschreibung aus mehreren elementaren Funktionen ($G_{i,j}$) zusammensetzt, von denen jede gleich der Zusammensetzung von wenigstens drei Funktionen ist, gemäß einer der folgenden Beziehungen:

$$G_{1,j} = f'_{1,j} \circ g_{\sigma j(1)} \circ S$$

$$G_{2,j} = f'_{2,j} \circ g_{\sigma j(2)} \circ f_{1,j}$$

$$\cdots\cdots\cdots\cdots\cdots\cdots\cdots\cdots\cdots$$

$$G_{r-1,j} = f'_{r-1,j} \circ g_{\sigma j(r-1)} \circ f_{r-2,j}$$

$$G_{r,j} = T \circ g_{\sigma j(r)} \circ f_{r-1,j}$$

wobei:

- $G_{i,j}$ die i-te elementare Funktion des Decoders j ist, wobei j ein Index ist, der einen Decoder oder eine Gruppe von Decodern identifiziert,
- die Funktionen $f_{i,j}$ und $f'_{i,j}$ vordefinierte Funktionen sind, die in der Lage sind zu bewirken, dass die elementaren Funktionen $G_{i,j}$ nicht miteinander kommutativ sind,
- $\sigma_j$ eine Permutation der Menge von Indizes $\{1; ...; r\}$ ist, die für jeden Decoder oder jede Gruppe von Decodern eindeutig ist,
- $g_{\sigma j(t)}$ die $\sigma_{j(t)}$-te Funktion einer vordefinierten Menge ist, die von r vordefinierten nichtlinearen, miteinander kommutativen Funktionen $g_i$ gebildet wird, und
- S und T vordefinierte Funktionen sind, die in der Lage sind, die Kryptoanalyse der elementaren Funktionen $G_{1,j}$ bzw. $G_{r,j}$ zu verkomplizieren.

## Claims

1. Traceable method for the encryption and/or decryption of information broadcast by at least one transmitter to a plurality of decoders, this method making it possible to identify, from among various legitimate users of the decoders, a traitor who has communicated secret information to an unauthorized third party such that this third party is able to encrypt and/or decrypt the information broadcast by the transmitter, wherein:

   - when the broadcast information is encrypted, the transmitter implements (at 86) at least one first secret cryptographic function, and
   - when this broadcast information is decrypted, all of the decoders implement (at 92) at least one and the same second secret cryptographic function identical to said first function or to the reciprocal thereof, each decoder to this end calling upon a mathematical description of said second function that is recorded in a memory (21), **characterized in that** the first function

   corresponds to a composition of r commutative nonlinear functions when the second function is implemented (at 92), the mathematical description of this second function that each decoder calls upon is different from one decoder to another or from one group of decoders to another, such that the mathematical description that is called upon uniquely identifies the decoder or a particular group of decoders from among all of the decoders, and **in that** said mathematical description (FKj) recorded in the memory of each decoder is formed of r elementary functions (Gi,j) that have to be composed with one another in a determined order in order to form said second secret function, the set of said elementary functions being constructed from a unique permutation of the set of functions making up the first function.

2. Method according to Claim 1, **characterized in that** the second cryptographic function is able to process non-redundant information.

3. Method according to Claim 1 or 2, **characterized in that** each elementary function ($G_{i,j}$) is equal to the composite of at least three functions in accordance with one of the following relationships:

$$G_{1,j} = f'_{1,j} \, \mathrm{o} g_{\sigma j\,(1)} \, \mathrm{o} S$$
$$G_{2,j} = f'_{2,j} \, \mathrm{o} g_{\sigma j\,(2)} \, \mathrm{o} f_{1,j}$$

$$\cdots\cdots\cdots\cdots\cdots\cdots\cdots\cdots$$

$$G_{r-1,j} = f'_{r-1,j} \, \mathrm{o} g_{\sigma j\,(r-1)} \, \mathrm{o} f_{r-2,j}$$
$$G_{r,j} = T \, \mathrm{o} g_{\sigma j\,(r)} \, \mathrm{o} f_{r-1,j}$$

where:

- $G_{i,j}$ is the ith elementary function of the decoder j, j being an index identifying a decoder or a group of decoders,
- the functions $f_{i,j}$ and $f'_{i,j}$ are predefined functions able to make the elementary functions $G_{i,j}$ non-commutative,
- $\sigma_j$ is a unique permutation of the set of indices {1; ...; r} for each decoder or group of decoders,
- $g_{\sigma j(t)}$ is the $\sigma_{j(t)}$th function of a predefined set formed of r predefined commutative nonlinear functions $g_i$, and
- S and T are predefined functions able to make cryptanalysis of the elementary functions $G_{1,j}$ and $G_{r,j}$, respectively, difficult.

4. Method according to Claim 3, **characterized in that** each function $f'_{i,j}$ is equal to the reciprocal $f_{i,j}^{-1}$ of the function $f_{i,j}$.

5. Method according to Claim 3 or 4, **characterized in that** the functions $f_{i,j}$ are linear functions of a set ($L^n$) of the n-tuples of elements of a finite field (L) over itself.

6. Method according to any one of Claims 3 to 5, **characterized in that** the functions S and T are invertible.

7. Method according to any one of Claims 3 to 6, **characterized in that** the functions S and T are linear functions of a set ($L^n$) of the n-tuples of elements of a finite field (L) to itself.

8. Method according to any one of Claims 3 to 7, **characterized in that** the functions $g_i$ are chosen such that each elementary function $G_{i,j}$ corresponds to an encryption block of a multivariate encryption algorithm.

9. Method according to any one of Claims 3 to 8, **characterized in that** each function $g_i$ has the form $g_i(a) = a^{e_i}$, where a is an element of an nth-degree extension L' of a base field L having q elements, and $e_i$ is a predefined exponent.

10. Method according to Claim 9, **characterized in that** the exponent $e_i$ has the form

$$1 + q^{\theta 1} + \ldots + q^{\theta i} + \ldots + q^{\theta d - 1},$$

where the exponents $\theta_i$ are predefined integers.

11. Information recording medium (21), **characterized in that** it includes instructions for executing a traceable encryption and/or decryption method according to any one of the preceding claims when these instructions are executed by a decoder.

12. Information recording medium (14), **characterized in that** it includes instructions for executing a traceable method for the encryption and/or decryption of information according to any one of Claims 1 to 9 when said instructions are executed by a transmitter.

13. Traceable system for the encryption and/or decryption of broadcast information, able to allow the identification, from among various legitimate users, of a traitor who has communicated secret information to an unauthorized third party such that this third party is able to encrypt and/or decrypt the broadcast information, this system including:

- a transmitter (4) able to encrypt the broadcast information, this transmitter being able to implement at least one first secret cryptographic function in order to directly process a message and then to broadcast this message,
- a plurality of decoders (8) able to decrypt the broadcast information, all of the decoders being able to implement one and the same second secret cryptographic function identical to said first function or to the reciprocal thereof in order to directly process said broadcast message, each decoder to this end being equipped with a memory (21) in which a mathematical description of said second function is recorded;

**characterized in that** the first function corresponds to a composition of r commutative nonlinear functions, the memory (21) of each decoder contains a mathematical description of said second function different from that recorded in the memory of the other decoders or in the memory of the other groups of decoders such that this mathematical description uniquely identifies the decoder or a particular group of decoders from among all of the decoders, and **in that** said mathematical description (FKj) recorded in the memory of each decoder is formed of r elementary functions (Gi, j) that have to be composed with one another in a determined order in order to form said second secret function, the set of said elementary functions being constructed from a unique permutation of the set of functions forming the first function.

14. Memory (21) intended to be associated with a decoder (8) of a traceable system for the encryption and/or decryption of information according to Claim 13, **characterized in that** it includes an equivalent mathematical description of said second secret function able to be used by the decoder, this mathematical description being composed of a plurality of elementary functions ($G_{i,j}$) each of which is equal to the composite of at least three functions in accordance with one of the following relationships:

$$G_{1,j} = f_{1,j} \circ g_{\sigma j\,(1)} \circ S$$
$$G_{2,j} = f_{2,j} \circ g_{\sigma j\,(2)} \circ f_{1,j}$$

$$\cdots\cdots\cdots\cdots\cdots\cdots$$

$$G_{r-1,j} = f_{r-1,\,j} \circ g_{\sigma j\,(r-1)} \circ f_{r-2,j}$$
$$G_{r,\,j} = T \circ g_{\sigma j\,(r)} \circ f_{r-1,j}$$

where:

- $G_{i,j}$ is the ith elementary function of the decoder j, j being an index identifying a decoder or a group of decoders,
- the functions $f_{i,j}$ and $f_{i,j}$ are predefined functions able to make the elementary functions $G_{i,j}$ non-commutative,
- $\sigma_j$ is a unique permutation of the set of indices {1; ...; r} for each decoder or group of decoders,
- $g_{\sigma j(t)}$ is the $\sigma_{j(t)}$th function of a predefined set formed of r predefined commutative nonlinear functions $g_i$, and
- S and T are predefined functions able to make cryptanalysis of the elementary functions $G_{1,j}$ and $G_{r,j}$, respectively, difficult.

*FIG.1*

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- An Efficient Public Key Traitor Tracing Scheme. **DAN BONEH ; MATTHEW FRANKLIN.** Proceedings Crypto '99, Lecture Notes in Computer Science. Springer-Verlag, 1999, vol. 1666, 338-353
- Tracing Traitors. **BENNY CHOR ; AMOS FIAT ; MONI NAOR.** Advances in Cryptology - Crypto'94, Lecture Notes in Computer Science. Springer-Verlag, 1994, vol. 839, 257-270
- Public Quadratic Polynomial-tuples for Efficient Signature Vérification and Message Encryption, Advances in Cryptology - EUROCRYPT '88. **TSUTOMU MATSUMOTO ; HIDEKI IMAI.** Lecture Notes in Computer Science. Springer, 1988, vol. 330, 419-453
- **PATARIN JACQUES.** Hidden Fields Equations (HFE) and Isomorphisms of Polynomyals (IP) : two new families of Asymmetric Algorithms - Eurocrypt 96. Springer Verlag, 33-48